# FASCICULE DE BREVET EUROPEEN

(11) **EP 3 242 049 B1**
(45) Date de publication et mention de la délivrance du brevet: **23.05.2018**
(21) Numéro de dépôt: 17165600.2
(22) Date de dépôt: 07.04.2017
(51) Int. Cl.: F16D 13/75

(54) **MECANISME D'EMBRAYAGE A RATTRAPAGE D'USURE**
KUPPLUNGSMECHANISMUS MIT VERSCHLEISSAUSGLEICH
CLUTCH MECHANISM WITH WEAR COMPENSATION

(30) Priorité: 02.05.2016 FR 1653926
(43) Date de publication de la demande: 08.11.2017
(73) Titulaire: Valeo Embrayages, 80009 Amiens Cedex 2 (FR)
(72) Inventeur: MARECHAL, Olivier, 80009 AMIENS (FR); BRAILLY, Julien, 80009 AMIENS (FR); BOUCHEZ, Olivier, 80009 AMIENS (FR); KINDT, Sébastien, 80009 AMIENS (FR)
(74) Mandataire: Cardon, Nicolas

(56) Documents cités:
- EP-A1- 2 902 649
- DE-B3-102014 218 964
- FR-A1- 2 984 434

## Description

La présente invention concerne un mécanisme d'embrayage à rattrapage d'usure, notamment pour un véhicule automobile.

Un dispositif d'embrayage comporte classiquement un plateau de réaction, un plateau de pression mobile axialement et un disque de friction monté entre lesdits plateaux de réaction et de pression. Le mouvement du plateau de pression est commandé par un diaphragme, lui-même commandé par une butée d'embrayage.

La butée d'embrayage est par exemple commandée par un actionneur piloté par un calculateur électronique afin d'exercer une force prédéterminée sur le diaphragme et de le déplacer sur une distance donnée.

Le plateau de pression est ainsi mobile entre une position totalement embrayée dans laquelle le disque de friction est serré entre lesdits plateaux de pression et de réaction, et une position totalement débrayée dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Le document FR 2 847 626, au nom de la Demanderesse, propose un dispositif d'embrayage équipé de moyens de rattrapage d'usure interposés entre un plateau de pression et un diaphragme monté sur un couvercle fixé à un plateau de réaction. Ces moyens de rattrapage d'usure comportent un anneau à rampes circonférentielles qui coopèrent avec des contre-rampes complémentaires du plateau de pression. L'anneau à rampes sert également à l'appui du diaphragme de sorte que la rotation de l'anneau par rapport au plateau de pression entraîne le déplacement des rampes par rapport aux contre-rampes et, ainsi, le déplacement axial du plateau de pression par rapport au diaphragme, au couvercle et au plateau de réaction. On fait ainsi varier la distance entre le plateau de pression et le plateau de réaction associé, d'une façon qui compense l'usure.

Un organe denté est en outre fixé sur l'anneau à rampes et engrène avec une vis sans fin montée dans un support, également appelé cassette, fixé au couvercle, l'organe denté étant au droit de la vis sans fin.

La vis sans fin est couplée en rotation avec une roue à rochet coopérant avec un cliquet fixé sur le couvercle. La vis sans fin et/ou la roue à rochet sont plaquées par un organe élastique contre une aile de la cassette.

Un cliquet se présente sous la forme d'une lamelle élastique comportant une partie de fixation au couvercle, une partie de commande s'étendant globalement perpendiculairement à la partie de fixation et deux bras latéraux reliant lesdites parties de fixation et de commande. La partie de commande comporte une languette de commande coopérant avec les dents de la roue à rochet de façon à autoriser la rotation de la roue à rochet dans un sens de rotation, en cas d'usure, et à empêcher la rotation de la roue à rochet dans le sens de rotation contraire. La liaison entre les bras et la partie de commande étant élastique, la languette de commande est constamment maintenue en appui sur les dents de la roue à rochet.

Le cliquet comporte en outre une languette de rappel élastique reliée à une extrémité à la partie de fixation et s'étendant entre les bras latéraux précités. Le diaphragme vient en appui contre la seconde extrémité (c'est-à-dire l'extrémité libre) de languette de rappel élastique du cliquet, de manière à déplacer la languette de commande lors de son actionnement.

La partie de commande comporte en outre deux butées latérales, à l'opposé de la languette de commande, destinées à venir en appui sur le couvercle lorsque le diaphragme est en position complètement débrayée. Le contact entre la butée du cliquet et le couvercle dans la position complètement débrayée permet de s'assurer qu'en cas d'usure, la languette de commande du cliquet saute bien la dent correspondante de la roue à rochet, de façon à pouvoir actionner ladite roue à rochet lors de la phase d'embrayage suivante.

Le cliquet est destiné à exercer un effort de rappel élastique sur le diaphragme, au niveau de la languette de rappel élastique en appui sur le diaphragme (en particulier en position complètement débrayée), et un effort de rappel élastique sur les dents correspondantes de la roue à rochet, au niveau de la languette de commande.

De cette manière, en cas d'usure et lors des actionnements successifs du diaphragme, le cliquet entraîne la rotation de la roue à rochet et de la vis sans fin, cette dernière entraînant la rotation de l'anneau portant les rampes, par l'intermédiaire de l'organe denté. On augmente ainsi progressivement la distance entre le plateau de pression et le couvercle et on diminue progressivement la distance entre le plateau de pression et le plateau de réaction associé, de façon à compenser l'usure.

La demande de brevet FR 2 995 955, au nom de la Demanderesse, divulgue l'utilisation de moyens de rattrapage d'usure similaires, dans lesquels le cliquet est dépourvu de languette de rappel élastique en appui sur le diaphragme. Afin de garantir que les butées du cliquet soient bien en appui sur le couvercle en position totalement débrayée, la partie de fixation et les bras sont élastiquement déformables et exercent un effort de rappel élastique dirigés vers le couvercle.

Dans l'art antérieur décrit précédemment, le couvercle recouvre l'ensemble des éléments formant les moyens de rattrapage d'usure, en particulier la cassette ou le support sur lequel sont montées la roue à rochet et la vis sans fin. Par ailleurs, la roue à rochet et la vis sans fin sont portées par un axe dont les extrémités sont montées dans des trous du couvercle et sont supportées par ce dernier. La cassette n'a donc pas pour rôle de supporter cet axe.

Une telle structure, du fait de l'épaisseur du couvercle, génère un encombrement radial et axial important.

L'invention a notamment pour but d'apporter une solution simple, efficace et économique à ce problème.

A cet effet, elle propose un mécanisme d'embrayage à rattrapage d'usure pour transmission de véhicule automobile, comportantun couvercle d'axe de révolution un plateau de pression actionné par un diaphragme mobile entre une position totalement embrayée et une position totalement débrayée, des moyens de rattrapage de l'usure du disque de friction de la transmission, comportant des moyens à rampes disposés du côté du diaphragme, coopérant avec des moyens à contre-rampes, disposés du côté du plateau de pression, de façon à ce que la rotation des moyens à rampes par rapport aux moyens à contre-rampes modifie la distance entre le diaphragme et le plateau de pression, les moyens de rattrapage d'usure comportant en outre des moyens d'entrainement en rotation des moyens à rampe, aptes à être rendus opérationnels par l'usure lorsque le diaphragme est actionné, lesdits moyens d'entraînement en rotation comportant une roue à rochet coopérant avec un cliquet élastique apte à être déplacé lors de l'actionnement du diaphragme, le cliquet comportant une partie de commande de la roue à rochet apte à venir en appui sur les dents de la roue à rochet et apte à sauter lesdites dents en cas d'usure, la roue à rochet étant portée par un axe monté sur un support, caractérisé en ce que le support est logé, au moins en partie, dans une ouverture du couvercle, ladite ouverture séparant une première partie et une seconde partie du couvercle écartées axialement l'une de l'autre, ledit support étant fixé audit couvercle, respectivement à la première partie et à la seconde partie, de façon à rigidifier axialement le couvercle au niveau de l'ouverture.

L'ouverture permet de réduire les dimensions du couvercle et de loger le support, même dans un encombrement réduit. Le support reprend une partie des efforts axiaux exercés par le diaphragme, de sorte que le mécanisme est apte à supporter l'ensemble des efforts et des contraintes requises malgré la formation d'une ouverture dans le couvercle.

Le support peut être fixé au couvercle par soudage et/ou par rivetage.

Par ailleurs, le support peut être monté sur un diamètre d'implantation important, ce qui permet d'augmenter les dimensions du diaphragme et en particulier de la partie annulaire élastique du diaphragme, en réduisant ainsi les contraintes au sein du diaphragme et/ou en augmentant le couple pouvant être transmis au travers du mécanisme selon l'invention.

Le couvercle peut comporter au moins une bride s'étendant radialement et servant à la fixation sur le plateau de réaction, le support présentant une forme générale en U comportant une base à partir de laquelle s'étendent deux ailes, la base du support étant fixée à la bride, les ailes étant fixées à un bord de l'ouverture, à l'opposé de la bride.

La forme en U du support participe à l'augmentation de la raideur du couvercle.

Dans ce cas, les bords formés par les extrémités libres des ailes sont inclinés par rapport au plan radial et dans la direction axiale.

Ainsi, dans le cas où les ailes sont soudées à leurs extrémités libres sur le couvercle par exemple, la longueur du cordon de soudure peut être importante, de façon à assurer une bonne fixation.

Le couvercle peut comporter une partie radiale dont la périphérie radialement externe est prolongée par une partie annulaire s'étendant axialement, l'ouverture étant ménagée au moins dans la partie annulaire axiale.

Les ailes peuvent être disposées radialement sur un diamètre au moins égal au diamètre d'implantation de la partie annuaire du couvercle.

Ladite ouverture peut comporter un premier bord de la partie et un second bord formé par la bride, reliés par des bords latéraux s'étendant axialement.

Le premier bord peut comporter deux surfaces radiales opposées, écartées circonférentiellement l'une de l'autre, les ailes du support venant en appui sur lesdites surfaces radiales, de façon à positionner circonférentiellement le support par rapport au couvercle.

On facilite ainsi le montage et le positionnement du support dans l'ouverture, avant fixation dudit support au couvercle.

Le mécanisme peut également comporter des moyens de positionnement radial du support par rapport au couvercle.

Ces moyens de positionnement sont par exemple formés par au moins un pion de centrage engagé dans des trous du support et du couvercle, en particulier dans des trous de la base du support et de la bride du couvercle. Le pion de centrage peut être formé intégralement avec le couvercle ou le support, ou être formé par un élément indépendant.

Le couvercle peut comporter une fenêtre dans laquelle s'étend au moins une partie du cliquet, lorsque le diaphragme est en position totalement débrayée, le cliquet comportant au moins une butée apte à venir en appui sur les bords de ladite fenêtre du couvercle.

Le contact entre la butée du cliquet et le couvercle dans la position totalement débrayée permet de s'assurer qu'en cas d'usure, la languette de commande du cliquet saute bien la dent correspondante de la roue à rochet, de façon à pouvoir actionner ladite roue à rochet lors de la phase d'embrayage suivante.

La fenêtre permet par ailleurs de réduire l'encombrement du mécanisme.

La fenêtre et l'ouverture peuvent être des orifices distincts.

L'ouverture et ladite fenêtre du couvercle peuvent être séparées l'une de l'autre par une partie du couvercle formant un pont s'étendant circonférentiellement.

La présence d'un pont de matière permet de rigidifier le couvercle.

La bride peut comporter au moins un premier trou servant au montage d'une vis de fixation de ladite bride à un plateau de réaction et au moins un second trou servant au montage d'un pion de centrage de la bride par rapport audit plateau de réaction, la base du support étant fixée à la bride, dans une zone située circonférentiellement entre les premier et second trous.

Le cliquet peut comporter une partie de fixation fixée à une partie du mécanisme d'embrayage qui est fixe par rapport au plateau de réaction, par exemple fixée au couvercle, et une partie de liaison comportant deux bras latéraux reliant lesdites parties de fixation et de commande du cliquet et délimitant entre eux une ouverture permettant le passage d'un lobe d'actionnement du diaphragme, la largeur ou la dimension circonférentielle de la partie de liaison du cliquet étant inférieure à la largeur ou la dimension circonférentielle de la partie de fixation du cliquet.

La largeur de la partie de liaison étant réduite, il est donc possible de réduire les dimensions de la fenêtre du couvercle en conséquence, ce qui augmente la rigidité du couvercle.

Le diaphragme peut comporter un lobe destiné à venir prendre appui sur la partie de commande du cliquet, le lobe étant équipé de moyens d'appui dont la position est réglable, tels par exemple qu'une vis engagée dans un filetage dudit lobe.

Il est ainsi possible de régler finement la position d'équilibre du diaphragme, c'est-à-dire l'angle du diaphragme en position totalement embrayée. Le filetage peut être formé dans un écrou fixé sur le lobe du diaphragme, par exemple serti sur ledit lobe.

Le mécanisme selon l'invention peut également comporter l'une ou plusieurs des caractéristiques suivantes :
- l'ouverture s'étend circonférentiellement, sur une plage angulaire comprise entre 10 et 40° par rapport à l'axe du couvercle,
- l'ouverture s'étend axialement sur une distance comprise entre 10 et 50 mm,
- la fenêtre du couvercle est située axialement en regard de l'ouverture,
- le pont a une forme générale en U dont la base s'étend circonférentiellement en regard du bord opposé de l'ouverture formé par la bride, et dont les ailes forment les surfaces radiales d'appui des ailes du support en U,
- le pont du couvercle est apte à reprendre des efforts en provenance du diaphragme sans risque de déformation,
- le support est fixé au couvercle par l'intermédiaire d'un cordon de soudure au niveau de chaque extrémité libre des ailes, et d'un cordon de soudure au niveau d'un bord de la base du support,
- les moyens de positionnement radial du support par rapport au couvercle sont par exemple formés par des pions, engagés par exemple dans des trous de la bride et dans des trous de la base du support en U,
- la partie de commande du cliquet comporte une languette de commande coopérant avec les dents de la roue à rochet de façon à autoriser la rotation de la roue à rochet dans un sens de rotation, en cas d'usure, et à empêcher la rotation de la roue à rochet dans le sens de rotation contraire,
- la partie de commande, la partie de liaison et/ou la partie de fixation du cliquet comportent au moins un raidisseur, tel par exemple qu'un bossage,
- le cliquet est formé par pliage d'une tôle,
- le cliquet est destiné à exercer un effort de rappel élastique sur un diaphragme et un effort de rappel élastique sur les dents de la roue à rochet,
- le lobe du diaphragme vient en appui au niveau d'un bord de la partie de commande du cliquet, ladite partie de commande comportant des moyens de renforcement dudit bord, tels par exemple qu'une déformation locale dudit bord réalisée par emboutissage,
- la partie de commande du cliquet comporte deux butées latérales, destinées à venir en appui sur le couvercle, de préférence sur les bords de la fenêtre du couvercle, lorsque le diaphragme est en position totalement débrayée.

L'invention s'applique au domaine des embrayages simples ou double. L'invention s'applique en outre à des embrayages normalement ouverts ou normalement fermés.

L'invention concerne également un dispositif d'embrayage comprenant un mécanisme d'embrayage du type précité, caractérisé en ce qu'il comporte un plateau de réaction, un disque de friction étant apte à être serré entre le plateau de pression et le plateau de réaction en position embrayée et libéré en position débrayée, le couvercle étant fixe par rapport au plateau de réaction.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue de face d'un mécanisme d'embrayage selon une forme de réalisation de l'invention,
- la figure 2 est une vue en coupe axiale du mécanisme,
- la figure 3 est une vue de côté du mécanisme,
- la figure 4 est une vue en perspective du mécanisme,
- la figure 5 est une vue de détail, en perspective, d'une partie du mécanisme,
- les figures 6 et 7 sont des vues en perspective du support, de la roue à rochet et de la vis sans fin,
- la figure 8 est une vue en perspective du cliquet,
- la figure 9 est une vue de détail, en perspective, d'une partie du mécanisme, le support, la roue à rochet la vis sans fin ayant été retirés,
- la figure 10 est une vue en section, selon un plan axial, d'un mécanisme selon une autre forme de réalisation.

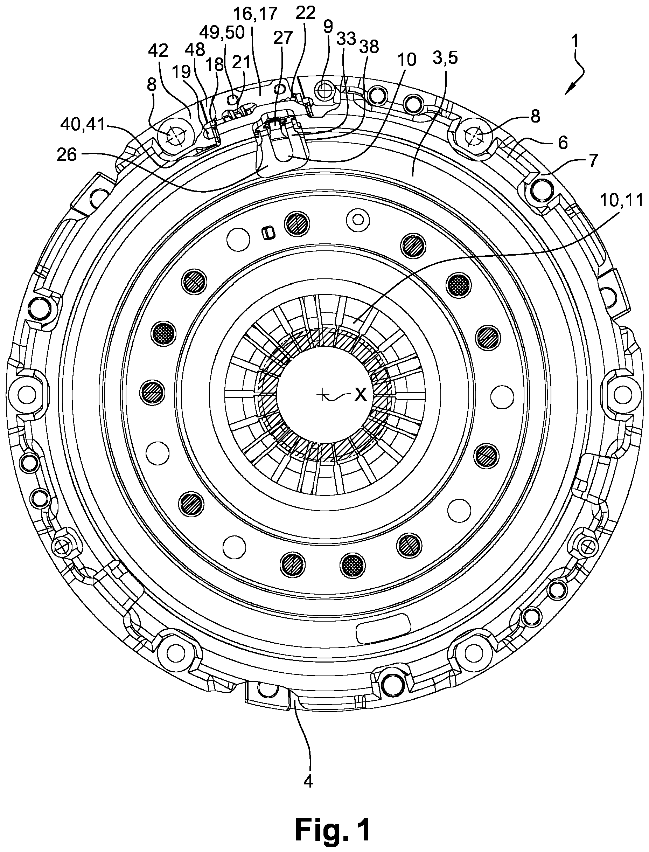

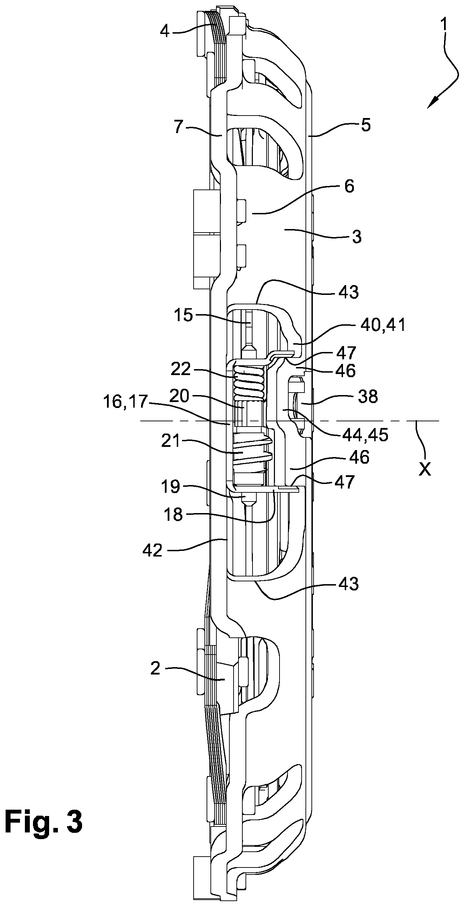

Les figures 1 à 9 représentent un mécanisme d'embrayage 1 pour une transmission de couple, en particulier pour véhicule automobile, selon une première forme de réalisation. Le mécanisme 1 est agencé pour être fixé à un plateau de réaction (non représenté) formé par un volant moteur ou par un double volant amortisseur, destiné à être couplé à un arbre menant tel que le vilebrequin d'un moteur à combustion interne, et comporte un plateau de pression 2 apte à serrer un disque de friction (non représenté) contre le plateau de réaction. Le disque de friction est constitué d'un voile portant à sa périphérie externe des garnitures de friction fixées de part et d'autre du voile. Ce disque de friction est destiné à être couplé à un arbre mené tel que l'arbre d'entrée d'une boîte de vitesses, par l'intermédiaire d'un moyeu lié au voile à sa périphérie interne.

Le plateau de pression 2 est solidaire en rotation d'un couvercle 3 de forme creuse et en tôle emboutie par l'intermédiaire de languettes tangentielles 4 qui, axialement élastiques, constituent en même temps des moyens de rappel du plateau de pression 2 vers le couvercle 3.

Le couvercle 3 comporte une partie radiale annulaire 5 dont la périphérie radialement externe est prolongée par une partie annulaire s'étendant axialement 6. L'extrémité libre de la partie annulaire axiale 6 est équipée d'une bride annulaire 7 s'étendant axialement vers l'extérieur et servant à la fixation du couvercle 3 sur le plateau de réaction.

La bride 7 comporte des trous 8 servant à la fixation du couvercle sur le plateau de réaction et des trous 9 dans lequel sont ménagés des pions de centrage servant au positionnement du couvercle 3 sur le plateau de réaction.

Le plateau de pression 2, tout en étant solidaire en rotation du couvercle 3, est donc déplaçable axialement par rapport au couvercle 3 par l'action d'un diaphragme annulaire 10 monté pivotant sur le couvercle 3, comme cela est connu en soi. Le diaphragme 10 est commandé par une butée d'embrayage, prenant appui sur des doigts 11 situés en périphérie radialement interne du diaphragme 10.

Le plateau de pression 2 est ainsi mobile entre une position totalement embrayée dans laquelle le disque de friction est serré entre lesdits plateaux de pression 2 et de réaction, et une position totalement débrayée dans laquelle le disque de friction est libéré.

Le mécanisme d'embrayage 1 comporte en outre des moyens de rattrapage automatique de l'usure des garnitures de friction, comprenant des rampes annulaires 12 formées sur le plateau de pression 2 et s'étendant circonférentiellement, coopérant avec des contre-rampes annulaires 13 portées par une bague 14 présentant une denture 15 à sa périphérie externe et intercalée entre le plateau de pression 2 et le diaphragme 10.

Les moyens de rattrapage comportent également un mécanisme de rotation de la bague comprenant un support 16 en U. Le support 16 comporte une base 17 sensiblement plane, à partir de laquelle s'étendent deux ailes 18. Les ailes 18 supportent les deux extrémités d'un axe 19 sur lequel sont montés une roue à rochet 20, une vis sans fin 21 qui est en prise avec la denture périphérique 15 de la bague 14 et qui est couplée en rotation avec la roue à rochet 20 (par exemple solidaire de celle-ci) et est montée entre celle-ci et une aile 18 du support 16, et un ressort de rappel 22 monté entre la roue à rochet 20 et une autre aile 18 du support.

Les extrémités libres des ailes 18, tournées du côté opposé à la base 17, forment des bords inclinés 23.

Une rondelle de frottement, réalisée par exemple dans un matériau à base de cuivre, peut être disposée entre une extrémité de la vis sans fin 21 et l'aile correspondante 18 du support 16. La rondelle de frottement est solidaire en rotation, par exemple par soudage, de l'aile 18 du support 16 ou de la vis sans fin 21. Elle est préférentiellement fixée à l'aile 18 du support 16.

De même, une autre rondelle est disposée entre l'extrémité correspondante du ressort de rappel 22 et l'aile correspondante 18 du support 16.

Ces rondelles permettent d'éviter l'usure du support 16 afin que le couple nécessaire à l'entraînement de la vis sans fin 21 par la roue à rochet 20 soit sensiblement constant au cours du temps.

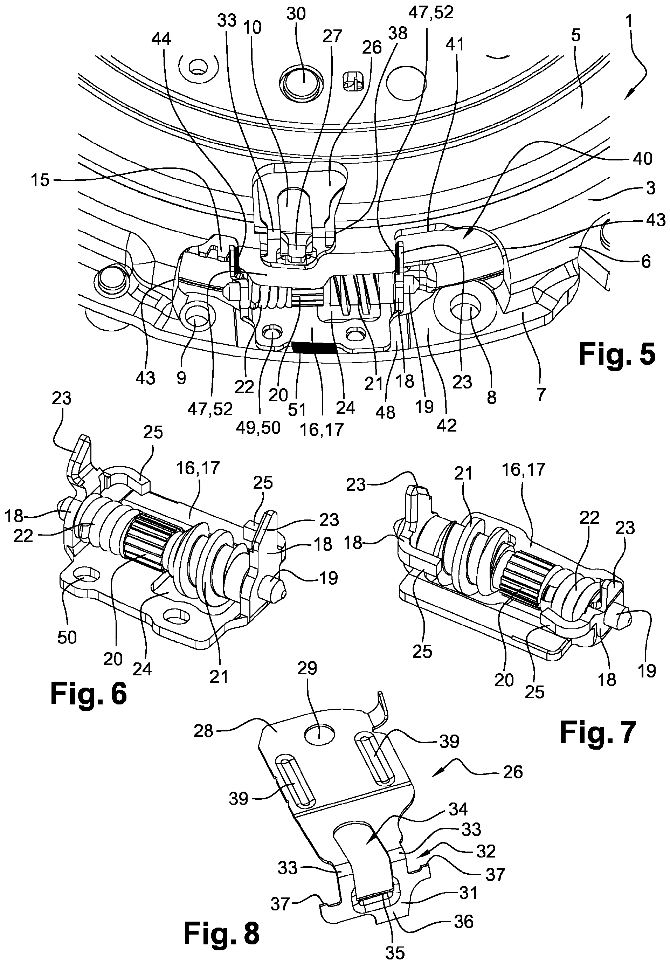

La base 17 du support 16 peut être ajourée (voir référence 24 à la figure 6 notamment) de façon à ne pas interférer avec la vis sans fin. Il est ainsi possible de réduire l'encombrement de l'ensemble. Par ailleurs, les ailes 18 du support 16 comportent des pattes 25 s'étendant circonférentiellement l'une en direction de l'autre, servant au maintien axial de la partie dentée 15 de la bague 14.

Les moyens de rattrapage d'usure comportent encore un cliquet élastique 26 en prise avec la roue à rochet 20 de façon à bloquer la rotation de la vis sans fin 21 dans un sens de rotation et à autoriser cette rotation dans l'autre sens de rotation. Le cliquet 26 est actionné par un lobe ou un doigt 27 situé en périphérie externe du diaphragme.

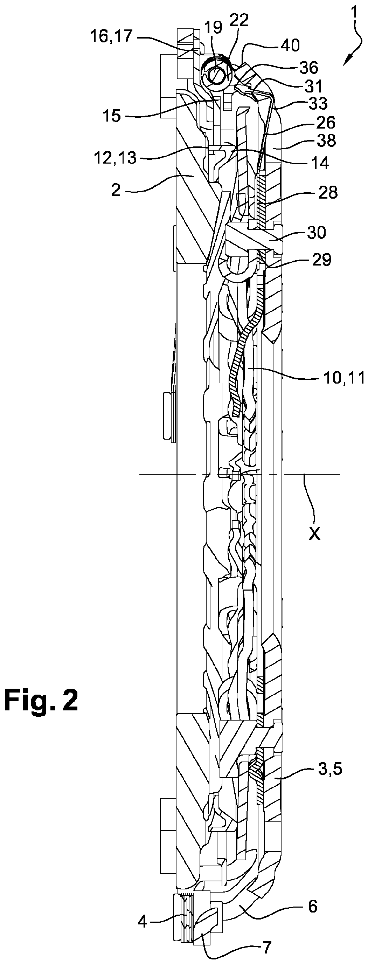

Comme cela est mieux visible à la figure 8, le cliquet 26 est formé d'une lamelle élastique présentant une partie 28 de fixation au couvercle 3 comportant un trou 29 servant au montage d'un rivet 30 (figure 2), une partie de commande 31 s'étendant globalement perpendiculairement à la partie de fixation 28 et une partie de liaison 32 comportant deux bras latéraux 33 reliant lesdites parties de fixation 28 et de commande 31 et délimitant entre eux une ouverture 34 permettant le passage du lobe 27 du diaphragme 10. La largeur ou la dimension circonférentielle de la partie de liaison 32 est inférieure à la largeur ou la dimension circonférentielle de la partie de fixation 27.

La partie radialement externe de l'ouverture 34 comporte un bord droit 35 situé au niveau de la partie de commande 31, sur lequel le lobe 27 du diaphragme 10 est destiné à venir prendre appui de manière à actionner le déplacement du cliquet 26. Ce bord droit 35 est situé en regard d'une languette de commande 36, à l'opposé de celle-ci sur la partie de commande 31.

La languette de commande 36 coopère avec les dents de la roue à rochet 20 de façon à autoriser la rotation de la roue à rochet 20 dans un sens de rotation, en cas d'usure, et à empêcher la rotation de la roue à rochet 20 dans le sens de rotation contraire. La liaison entre les bras 33 et la partie de commande 31 étant élastique, la languette de commande 36 est constamment maintenue en appui sur les dents de la roue à rochet 20.

La partie de commande 31 comporte en outre deux butées latérales 37, à l'opposé de la languette de commande 36, destinées à venir en appui sur les bords d'une fenêtre 38 ménagée dans la partie radiale 5 du couvercle 3 lorsque le diaphragme 10 est en position complètement débrayée. Cette fenêtre 38 permet d'éviter toute collision entre le cliquet 26 et le fond du couvercle 3, autre que par les butées 37 précitées. Le contact entre les butées 37 du cliquet 26 et le couvercle 3, dans la position complètement débrayée, permet de s'assurer qu'en cas d'usure, la languette de commande 36 du cliquet 26 saute bien la dent correspondante de la roue à rochet 20, de façon à pouvoir actionner ladite roue à rochet 20 lors de la phase d'embrayage suivante.

Afin de garantir que les butées 37 du cliquet 26 soient bien en appui sur le couvercle 3 en position totalement débrayée, la partie de fixation 28 et les bras 33 sont élastiquement déformables et exercent un effort de rappel élastique dirigé vers le couvercle 3.

Le cliquet 26 est équipé de raidisseurs 39 au niveau de sa partie de fixation 28 et/ou de ses bras 33. Dans la forme de réalisation représentée aux figures, le cliquet 26 comporte deux bossages 39 s'étendant parallèlement à l'axe du cliquet 26, situés de part et d'autre de l'axe médian du cliquet 26 et à proximité des bords latéraux de la partie de fixation 28. Les bossages 39 sont formés par déformation, par exemple par emboutissage. Chaque bossage 39 forme ainsi une zone en creux sur l'une des faces du cliquet 26 et une zone en saillie sur l'autre face du cliquet 26.

Dans cette forme de réalisation également, le bord droit 35 servant à l'appui du lobe 27 du diaphragme 10 comporte des moyens de renforcement dudit bord, tels par exemple qu'une déformation locale dudit bord 35 réalisée par emboutissage. De tels moyens de renforcement permettent d'éviter d'endommager la partie de commande 31.

Selon l'invention, le module formé par le support 26, l'axe 29 et les éléments 20, 21, 22 sur l'axe 19, est monté dans une ouverture 40 du couvercle 3. L'ouverture 40 est délimitée par un premier bord 41 et un second bord 42 relié par deux bords latéraux 43. L'ouverture 40 s'étend circonférentiellement sur une plage angulaire comprise entre 10 et 40° et axialement sur une distance comprise entre 10 et 50 mm. En particulier, l'ouverture 40 est formée au niveau de la partie annulaire axiale 6 du couvercle 3. Le bord 42 de l'ouverture 40 est formé par la bride 7 et le bord 41 est formé au niveau de la jonction entre la partie axiale 6 et la partie radial 5 du couvercle 3.

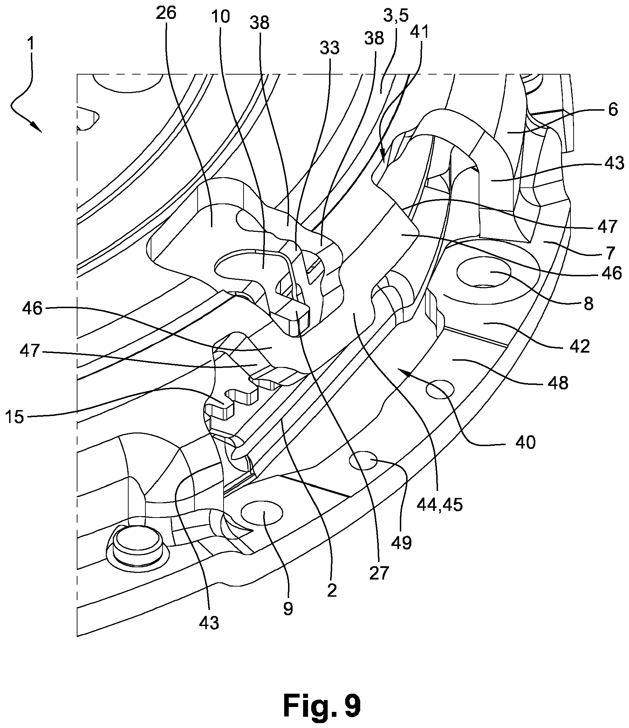

L'ouverture 40 est disposée axialement en regard de la fenêtre 38 du couvercle 3, un pont de matière 44 s'étendant circonférentiellement séparant l'ouverture 40 de la fenêtre 38. Ce pont 44 a une forme générale de U et comporte une base 45 à partir de laquelle s'étendent deux ailes 46 reliant la base 45 du pont 44 au reste du couvercle 3 (figure 9). Les ailes 46 du pont définissent deux surfaces planes opposées 47, s'étendant axialement tournées vers les bords latéraux correspondants 43 tout en étant situées à distance desdits bords latéraux 43.

La bride 7 comporte une surface plane de référence 48, située au niveau du bord 42 de l'ouverture 40, à savoir la bride 7, et située circonférentiellement entre un trou 8 servant à la fixation du couvercle 3 sur le plateau de réaction et un trou 9 servant à l'engagement d'un pion de centrage.

Le support 16 est monté dans l'ouverture 40 de façon à ce que la base 17 soit en appui et soit fixée sur la surface plane de référence 48 de la bride 7 et que les ailes 18 soient en appui sur chacune des faces planes 47 du pont 44. L'écartement entre les ailes 18 du support 16 correspond ainsi à la distance entre les surfaces planes 47 du pont 44. Des pions de centrage (non représentés) sont par ailleurs engagés dans des ouvertures 49, 50 de la bride 7 et de la base 17 du support 16. Le support 16 est ainsi positionné radialement et circonférentiellement par rapport au couvercle 3.

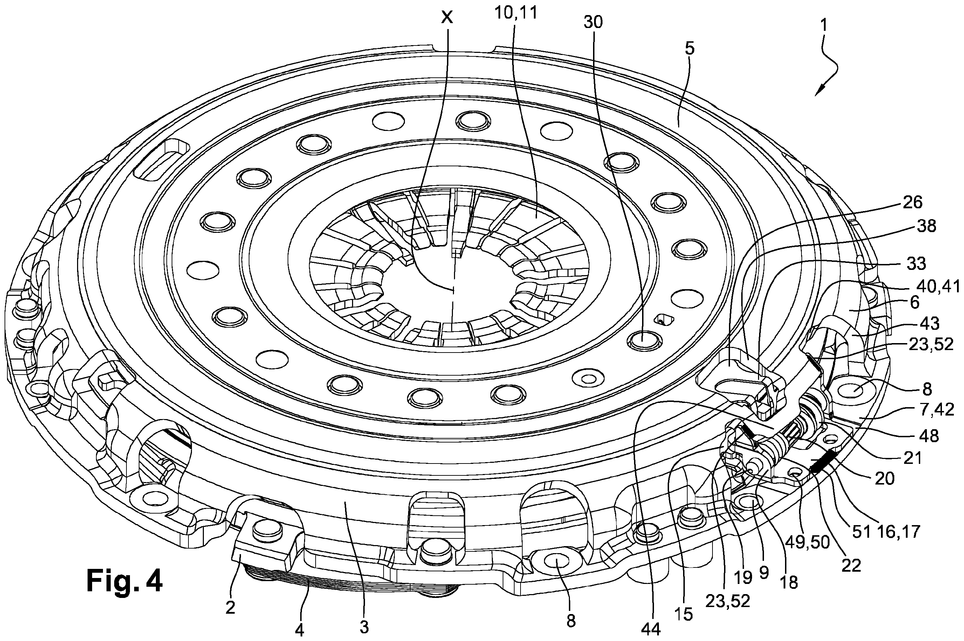

Le support 16 est fixé au couvercle 3 par soudage. Plus particulièrement, comme cela est visible aux figures 4 et 5, un premier cordon de soudure 51 est formé au niveau de l'un des bords de la base 17, de manière à fixer la base 17 à la surface plane 48 de la bride 7, un deuxième et un troisième cordons de soudure 52 étant formés au niveau des bords inclinés 23 des ailes 18, de manière à fixer les ailes 18 aux surfaces 47 du pont 44.

Le support 16 est ainsi apte à reprendre des efforts axiaux exercés par le diaphragme et dirigés du bord 41 vers le bord 42, 7 et inversement. Par ailleurs, le support 16 assure également le support de l'axe 19 et des éléments 20, 21, 22 montés sur l'axe 19.

Bien entendu, la fixation du support 16 au couvercle 3 peut être réalisée par tout autre moyen, par exemple par vissage ou par rivetage.

Le fonctionnement de ce mécanisme d'embrayage 1 et de ces moyens de rattrapage d'usure va maintenant être décrit plus en détail.

Lorsque le diaphragme 10 et le disque de pression 2 sont en position complètement embrayée et que les garnitures du disque de friction sont à l'état neuf, la languette de commande 36 du cliquet 26 a son extrémité libre en appui sur le pied ou le fond d'une dent de la roue à rochet 20.

Lorsque l'embrayage est débrayé, le diaphragme 10 bascule de façon à ce que sa périphérie externe libère progressivement le plateau de pression 2 et le cliquet 26.

L'extrémité de la languette de commande 36 du cliquet 26 suit la rampe inclinée constituée par la dent dans le pied de laquelle elle se trouvait à l'étape précédente, les dents de la roue à rochet 20 étant réalisées de sorte que, lors de cette course de débrayage, l'extrémité de la languette de commande 36 ne saute pas une dent. Ceci est obtenu par la venue en butée du cliquet 26 contre le couvercle 3, à l'aide des butées 37.

La fixation du support 16 simultanément sur les parties 5 et 7 améliore la précision de la venue en butée du cliquet 26 en raison d'une rigidité accrue du couvercle dans cette zone.

Lorsque les garnitures s'usent, le plateau de pression 2, soumis à l'effort axial du diaphragme 10, se rapproche du plateau de réaction qui est fixe axialement ainsi que le couvercle 3. La périphérie radialement externe du diaphragme 10 se rapproche donc du plateau de réaction, en entraînant dans son mouvement le cliquet 26. La roue à rochet 20 tourne alors autour de son axe 19 dans le sens horaire. Cet entraînement en rotation de la roue à rochet 20 conduit la vis sans fin 21 à tourner également sur l'axe 19.

La bague 14 portant les contre-rampes 13 étant immobilisée en rotation sous l'effet de la charge du diaphragme 10, la vis sans fin 21 qui engrène avec la denture 15 se visse sur cette denture 15 en comprimant le ressort 22.

Lors de l'opération de débrayage qui suit la phase d'usure qui vient d'être décrite, le plateau de pression 2 libère les garnitures en s'éloignant d'elles sous l'action des languettes 4 qui le ramènent vers le fond du couvercle 3 ainsi que la bague 14 en contact avec le diaphragme 10. Le ressort 22 sollicite la vis sans fin 21 vers l'aile 18 du support 16, dont elle s'est éloignée en phase d'usure. La charge du diaphragme 10 n'étant plus appliquée sur la bague 14, le ressort 22 déplace la vis sans fin 21 qui est empêchée de tourner sur elle-même par le cliquet 26 et qui entraîne alors en rotation la bague 14, par l'intermédiaire de sa denture 15. Les rampes 12, par coopération avec les contre-rampes 13, éloignent le plateau de pression 2 du fond du couvercle 3, rattrapant ainsi au moins en partie l'usure des garnitures du disque de friction.

Plusieurs opérations d'embrayage et de débrayage peuvent être nécessaires avant que le dispositif de rattrapage de jeu n'entre en phase de rattrapage proprement dite.

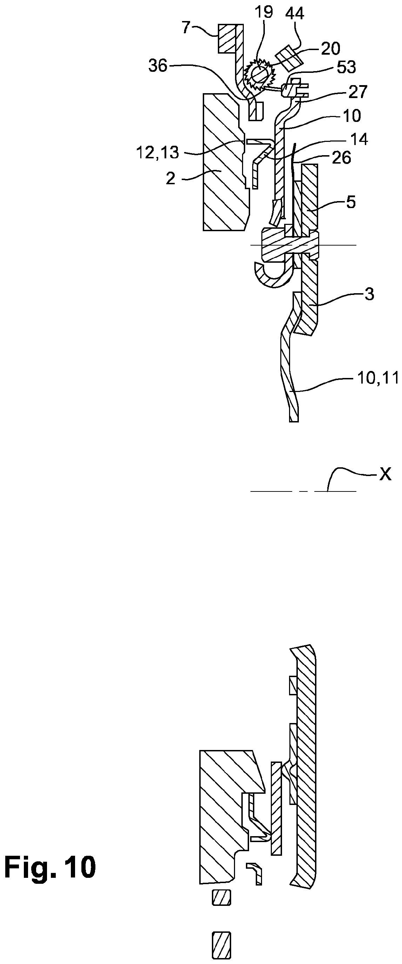

La figure 10 illustre un mécanisme d'embrayage 1 selon une seconde forme de réalisation de réalisation, qui diffère de celui exposé précédemment en référence aux figures 1 à 9 en ce que le lobe 27 du diaphragme 10 est équipé de moyens d'appui dont la position axiale est réglable. En particulier, le lobe 27 est équipé d'un filetage ou d'un écrou serti dans un orifice du lobe 27, une vis 53 étant montée dans ledit filetage ou écrou. L'extrémité de la vis 53 est destinée à venir en appui sur le bord 35 de la partie de commande 31 du cliquet 26, la position axiale de ladite extrémité pouvant être ajustée par vissage ou dévissage de la vis 53 dans le filetage ou l'écrou.

Il est ainsi possible de régler finement la position d'équilibre du diaphragme 10, c'est-à-dire l'angle du diaphragme 10 en position totalement embrayée.

## Revendications

1. Mécanisme d'embrayage (1) à rattrapage d'usure pour transmission de véhicule automobile, comportant un couvercle (3) d'axe de révolution (X), un plateau de pression (2) actionné par un diaphragme (10) mobile entre une position totalement embrayée et une position totalement débrayée, des moyens de rattrapage de l'usure du disque de friction de la transmission comportant des moyens à rampes (12, 14) disposés du côté du diaphragme (10), coopérant avec des moyens à contre-rampes (13), disposés du côté du plateau de pression (2), de façon à ce que la rotation des moyens à rampes (12, 14) par rapport aux moyens à contre-rampes (13) modifie la distance entre le diaphragme (9) et le plateau de pression (2), les moyens de rattrapage d'usure comportant en outre des moyens d'entrainement en rotation des moyens à rampe (12, 14), aptes à être rendus opérationnels par l'usure lorsque le diaphragme (10) est actionné, lesdits moyens d'entraînement en rotation comportant une roue à rochet (20) coopérant avec un cliquet élastique (26) apte à être déplacé lors de l'actionnement du diaphragme (10), le cliquet (26) comportant une partie de commande (31) de la roue à rochet (20) apte à venir en appui sur les dents de la roue à rochet (20) et apte à sauter lesdites dents (20) en cas d'usure, la roue à rochet (20) étant portée par un axe (19) monté sur un support (16), **caractérisé en ce que** le support (16) est logé, au moins en partie, dans une ouverture (40) du couvercle (3), ladite ouverture (40) séparant une première partie (5) et une seconde partie (7) du couvercle (3) écartées axialement l'une de l'autre, ledit support (16) étant fixé audit couvercle (3), respectivement à la première partie (5) et à la seconde partie (7), de façon à rigidifier axialement le couvercle (3) au niveau de l'ouverture (40).

2. Mécanisme (1) selon la revendication 1, **caractérisé en ce que** le support (16) est fixé au couvercle (3) par soudage et/ou par rivetage.

3. Mécanisme (1) selon la revendication 1 ou 2, **caractérisé en ce que** le couvercle (3) comporte au moins une bride (7) s'étendant radialement et servant à la fixation sur le plateau de réaction, le support (16) présentant une forme générale en U comportant une base (17) à partir de laquelle s'étendent deux ailes (18), la base (17) du support (16) étant fixée à la bride (7), les ailes (18) étant fixées à un bord (41) de l'ouverture (40), à l'opposé de la bride (7).

4. Mécanisme (1) selon l'une des revendications 1 à 3, **caractérisé en ce que** le couvercle (3) comporte une partie radiale (5) dont la périphérie radialement externe est prolongée par une partie annulaire (6) s'étendant axialement, l'ouverture (40) étant ménagée au moins dans la partie annulaire axiale (6).

5. Mécanisme (1) selon les revendications 3 et 4, **caractérisé en ce que** les ailes (18) sont disposées radialement sur un diamètre au moins égal au diamètre d'implantation de la partie annuaire (6) du couvercle (3).

6. Mécanisme (1) selon l'une des revendications 3 à 5, **caractérisé en ce que** ladite ouverture (40) comporte un premier bord (41) de la partie (5) et un second bord (42) formé par la bride (7), reliés par des bords latéraux (43) s'étendant axialement.

7. Mécanisme (1) selon la revendication 6, **caractérisé en ce que** le premier bord comporte deux surfaces radiales opposées (47), écartées circonférentiellement l'une de l'autre, les ailes (18) du support (16) venant en appui sur lesdites surfaces radiales (47), de façon à positionner circonférentiellement le support (16) par rapport au couvercle (3).

8. Mécanisme (1) selon l'une des revendications 1 à 7, **caractérisé en ce qu'**il comporte des moyens de positionnement radial (49, 50) du support (16) par rapport au couvercle (3).

9. Mécanisme (1) selon l'une des revendications 1 à 8, **caractérisé en ce que** le couvercle (3) comporte une fenêtre (38) dans laquelle s'étend au moins une partie du cliquet (26), lorsque le diaphragme (10) est en position totalement débrayée, le cliquet (26) comportant au moins une butée (37) apte à venir en appui sur les bords de ladite fenêtre (38) du couvercle (3).

10. Mécanisme (1) selon la revendication 9, **caractérisé en ce que** l'ouverture (40) et ladite fenêtre (38) du couvercle (3) sont séparées l'une de l'autre par une partie du couvercle (3) formant un pont (44) s'étendant circonférentiellement.

11. Mécanisme (1) selon l'une des revendications 3 à 10, **caractérisé en ce que** la bride (7) comporte au moins un premier trou (8) servant au montage d'une vis de fixation de ladite bride (7) à un plateau de réaction et au moins un second trou (9) servant au montage d'un pion de centrage de la bride (7) par rapport audit plateau de réaction, la base (17) du support (16) étant fixée à la bride (7), dans une zone située circonférentiellement entre les premier et second trous (8, 9).

12. Mécanisme (1) selon l'une des revendications 1 à 11, **caractérisé en ce que** le cliquet (26) comporte une partie de fixation (28) fixée à une partie du mécanisme d'embrayage (1) qui est fixe par rapport au plateau de réaction, par exemple fixée au couvercle (3), et une partie de liaison (32) comportant deux bras latéraux (33) reliant lesdites parties de fixation (28) et de commande (31) du cliquet (26) et délimitant entre eux une ouverture (34) permettant le passage d'un lobe d'actionnement (27) du diaphragme (10), la largeur ou la dimension circonférentielle de la partie de liaison (32) du cliquet étant inférieure à la largeur ou la dimension circonférentielle de la partie de fixation (28) du cliquet (26).

13. Mécanisme (1) selon l'une des revendications 1 à 12, **caractérisé en ce que** le diaphragme (10) comporte un lobe (27) destiné à venir prendre appui sur la partie de commande (31) du cliquet (26), le lobe (27) étant équipé de moyens d'appui dont la position est réglable, tels par exemple qu'une vis (53) engagée dans un filetage dudit lobe (27).

14. Dispositif d'embrayage comprenant un mécanisme d'embrayage (1) selon l'une des revendications 1 à 13, **caractérisé en ce qu'**il comporte un plateau de réaction, un disque de friction étant apte à être serré entre le plateau de pression (2) et le plateau de réaction en position embrayée et libéré en position débrayée, le couvercle (3) étant fixe par rapport au plateau de réaction.

## Patentansprüche

1. Kupplungsmechanismus (1) mit Verschleißausgleich für die Kraftübertragung eines Kraftfahrzeugs, welcher aufweist: eine Abdeckung (3) einer Rotationsachse (X), eine von einer Membran (10) betätigte Anpressplatte (2), die zwischen einer vollständig eingerückten Position und einer vollständig ausgerückten Position beweglich ist, Mittel zum Ausgleich des Verschleißes der Reibschiebe der Kraftübertragung, welche auf der Seite der Membran (10) angeordnete Rampenmittel (12, 14) aufweisen, die mit auf der Seite der Anpressplatte (2) angeordneten Gegenrampenmitteln (13) zusammenwirken, derart, dass die Rotation der Rampenmittel (12, 14) in Bezug auf die Gegenrampenmittel (13) den Abstand zwischen der Membran (9) und der Anpressplatte (2) verändert, wobei die Mittel zum Verschleißausgleich außerdem Mittel zum Drehantrieb der Rampenmittel (12, 14) aufweisen, die geeignet sind, durch den Verschleiß funktionsfähig gemacht zu werden, wenn die Membran (10) betätigt wird, wobei die Mittel zum Drehantrieb ein Klinkenrad (20) aufweisen, das mit einer elastischen Klinke (26) zusammenwirkt, die bei der Betätigung der Membran (10) verlagerbar ist, wobei die Klinke (26) einen Teil zur Steuerung (31) des Klinkenrades (20) aufweist, der geeignet ist, an den Zähnen des Klinkenrades (20) zur Anlage zu kommen, und geeignet ist, diese Zähne (20) im Falle eines Verschleißes zu überspringen, wobei das Klinkenrad (20) von einer Achse (19) getragen wird, die an einer Abstützung (16) angebracht ist, **dadurch gekennzeichnet, dass** die Abstützung (16) wenigstens teilweise in einer Öffnung (40) der Abdeckung (3) aufgenommen ist, wobei die Öffnung (40) einen ersten Teil (5) und einen zweiten Teil (7) der Abdeckung (3), die axial voneinander beabstandet sind, trennt, wobei die Abstützung (16) an der Abdeckung (3) am ersten Teil (5) bzw. am zweiten Teil (7) befestigt ist, derart, dass sie die Abdeckung (3) im Bereich der Öffnung (40) axial versteift.

2. Mechanismus (1) nach Anspruch 1, **dadurch gekennzeichnet, dass** die Abstützung (16) an der Abdeckung (3) durch Schweißen und/oder durch Vernieten befestigt ist.

3. Mechanismus (1) nach Anspruch 1 oder 2, **dadurch gekennzeichnet, dass** die Abdeckung (3) wenigstens einen Flansch (7) aufweist, der sich radial erstreckt und zur Befestigung an der Gegendruckplatte dient, wobei die Abstützung (16) im Wesentlichen eine U-Form aufweist, die ein Unterteil (17) aufweist, von dem aus sich zwei Schenkel (18) erstrecken, wobei das Unterteil (17) der Abstützung (16) an dem Flansch (7) befestigt ist und die Schenkel (18) an einem Rand (41) der Öffnung (40) gegenüber dem Flansch (7) befestigt sind.

4. Mechanismus (1) nach einem der Ansprüche 1 bis 3, **dadurch gekennzeichnet, dass** die Abdeckung (3) einen radialen Teil (5) aufweist, dessen radial äußerer Umfang durch einen ringförmigen Teil (6) verlängert wird, der sich axial erstreckt, wobei die Öffnung (40) wenigstens in dem axialen ringförmigen Teil (6) ausgebildet ist.

5. Mechanismus (1) nach den Ansprüchen 3 und 4, **dadurch gekennzeichnet, dass** die Schenkel (18) radial auf einem Durchmesser angeordnet sind, der wenigstens gleich dem Montagedurchmesser des ringförmigen Teils (6) der Abdeckung (3) ist.

6. Mechanismus (1) nach einem der Ansprüche 3 bis 5, **dadurch gekennzeichnet, dass** die Öffnung (40) einen ersten Rand (41) des Teils (5) und einen von dem Flansch (7) gebildeten zweiten Rand (42) aufweist, die durch sich axial erstreckende seitliche Ränder (43) verbunden sind.

7. Mechanismus (1) nach Anspruch 6, **dadurch gekennzeichnet, dass** der erste Rand zwei einander gegenüberliegende radiale Flächen (47) aufweist, die in Umfangsrichtung voneinander beabstandet sind, wobei die Schenkel (18) der Abstützung (16) an diesen radialen Flächen (47) zur Anlage kommen, so dass die Abstützung (16) in Bezug auf die Abdeckung (3) in Umfangsrichtung positioniert wird.

8. Mechanismus (1) nach einem der Ansprüche 1 bis 7, **dadurch gekennzeichnet, dass** er Mittel zur radialen Positionierung (49, 50) der Abstützung (16) in Bezug auf die Abdeckung (3) aufweist.

9. Mechanismus (1) nach einem der Ansprüche 1 bis 8, **dadurch gekennzeichnet, dass** die Abdeckung (3) ein Fenster (38) aufweist, in welchem sich wenigstens ein Teil der Klinke (26) erstreckt, wenn sich die Membran (10) in der vollständig ausgerückten Position befindet, wobei die Klinke (26) wenigstens einen Anschlag (37) aufweist, der geeignet ist, an den Rändern des Fensters (38) der Abdeckung (3) zur Anlage zu kommen.

10. Mechanismus (1) nach Anspruch 9, **dadurch gekennzeichnet, dass** die Öffnung (40) und das Fenster (38) der Abdeckung (3) durch einen Teil der Abdeckung (3) voneinander getrennt sind, der eine sich in Umfangsrichtung erstreckende Brücke (44) bildet.

11. Mechanismus (1) nach einem der Ansprüche 3 bis 10, **dadurch gekennzeichnet, dass** der Flansch (7) wenigstens ein erstes Loch (8), das zur Anbringung einer Schraube zur Befestigung des Flansches (7) an einer Gegendruckplatte dient, und wenigstens ein zweites Loch (9), das zur Anbringung eines Stiftes zur Zentrierung des Flansches (7) in Bezug auf die Gegendruckplatte dient, aufweist, wobei das Unterteil (17) der Abstützung (16) an dem Flansch (7) in einem Bereich befestigt ist, der sich in Umfangsrichtung zwischen dem ersten und dem zweiten Loch (8, 9) befindet.

12. Mechanismus (1) nach einem der Ansprüche 1 bis 11, **dadurch gekennzeichnet, dass** die Klinke (26) einen an einem Teil des Kupplungsmechanismus (1) befestigten Befestigungsteil (28) aufweist, der in Bezug auf die Gegendruckplatte feststehend ist, zum Beispiel an der Abdeckung (3) befestigt ist, und einen Verbindungsteil (32), der zwei seitliche Arme (33) aufweist, welche den Befestigungsteil (28) und den Steuerungsteil (31) der Klinke (26) verbinden und zwischen sich eine Öffnung (34) begrenzen, die den Durchgang eines Betätigungslappens (27) der Membran (10) ermöglicht, wobei die Breite oder die Umfangsabmessung des Verbindungsteils (32) der Klinke kleiner als die Breite oder die Umfangsabmessung des Befestigungsteils (28) der Klinke (26) ist.

13. Mechanismus (1) nach einem der Ansprüche 1 bis 12, **dadurch gekennzeichnet, dass** die Membran (10) einen Lappen (27) aufweist, der dazu bestimmt ist, an dem Steuerungsteil (31) der Klinke (26) zu Anlage zu kommen, wobei der Lappen (27) mit Anlagemitteln ausgestattet ist, deren Position verstellbar ist, wie zum Beispiel mit einer Schraube (53), die mit einem Gewinde des Lappens (27) in Eingriff steht.

14. Kupplungsvorrichtung, welche einen Kupplungsmechanismus (1) nach einem der Ansprüche 1 bis 13 umfasst, **dadurch gekennzeichnet, dass** sie eine Gegendruckplatte und eine Reibscheibe, die in der eingerückten Position zwischen der Anpressplatte (2) und der Gegendruckplatte festklemmbar und in der ausgerückten Position freigebbar ist, aufweist, wobei die Abdeckung (3) in Bezug auf die Gegendruckplatte fest ist.

## Claims

1. Clutch mechanism (1) with wear compensation for a transmission of a motor vehicle, comprising a cover (3) with a revolution axis (X), a pressure plate (2) actuated by a diaphragm (10) which is movable between a fully engaged position and a fully disengaged position, means for compensating for wear on the friction plate of the transmission comprising means (12, 14) with ramps arranged on the side of the diaphragm (10) and cooperating with means (13) with counter-ramps arranged on the side of the pressure plate (2), such that the rotation of the ramp means (12, 14) relative to the counter-ramp means (13) modifies the distance between the diaphragm (9) and the pressure plate (2), the wear compensation means also comprising means for driving the ramp means (12, 14) in rotation and able to be made operational by the wear when the diaphragm (10) is actuated, said rotational drive means comprising a ratchet wheel (20) cooperating with an elastic pawl (26) able to be moved on actuation of the diaphragm (10), the pawl (26) comprising a control portion (31) of the ratchet wheel (20) able to come to rest on the teeth of the ratchet wheel (20) and able to jump said teeth (20) in the case of wear, the ratchet wheel (20) being carried by a shaft (19) mounted on a support (16), **characterized in that** the support (16) is at least partially housed in an opening (40) of the cover (3), said opening (40) separating a first portion (5) and a second portion (7) of the cover (3) axially spaced apart from each other, said support (16) being fixed to said cover (3), to the first portion (5) and to the second portion (7) respectively, so as to stiffen the cover (3) axially at the level of the opening (40).

2. Mechanism (1) according to Claim 1, **characterized in that** the support (16) is fixed to the cover (3) by welding and/or by riveting.

3. Mechanism (1) according to Claim 1 or 2, **characterized in that** the cover (3) comprises at least one flange (7) extending radially and serving for fixing on the reaction plate, the support (16) being generally U-shaped and comprising a base (17) from which two wings (18) extend, the base (17) of the support (16) being fixed to the flange (7), the wings (18) being fixed to an edge (41) of the opening (40) opposite the flange (7).

4. Mechanism (1) according to any of Claims 1 to 3, **characterized in that** the cover (3) comprises a radial portion (5), the radially outer periphery of which is extended by an annular portion (6) extending axially, the opening (40) being provided at least in the axial annular portion (6).

5. Mechanism (1) according to Claims 3 and 4, **characterized in that** the wings (18) are arranged radially over a diameter at least equal to the installation diameter of the annular portion (6) of the cover (3).

6. Mechanism (1) according to any of Claims 3 to 5, **characterized in that** said opening (40) comprises a first edge (41) of the portion (5) and a second edge (42) formed by the flange (7), connected by lateral edges (43) extending axially.

7. Mechanism (1) according to Claim 6, **characterized in that** the first edge comprises two opposing radial surfaces (47) spaced circumferentially from each other, the wings (18) of the support (16) coming to rest on said radial surfaces (47) so as to position the support (16) circumferentially relative to the cover (3).

8. Mechanism (1) according to any of Claims 1 to 7, **characterized in that** it comprises means (49, 50) for radially positioning the support (16) relative to the cover (3).

9. Mechanism (1) according to any of Claims 1 to 8, **characterized in that** the cover (3) comprises a window (38) into which at least a part of the pawl (26) extends when the diaphragm (10) is in the fully disengaged position, the pawl (26) comprising at least one stop (37) able to come to rest on the edges of said window (38) of the cover (3).

10. Mechanism (1) according to Claim 9, **characterized in that** the opening (40) and said window (38) of the cover (3) are separated from each other by a portion of the cover (3) forming a bridge (44) extending circumferentially.

11. Mechanism (1) according to any of Claims 3 to 10, **characterized in that** the flange (7) comprises at least one first hole (8) serving for mounting of a screw for fixing said flange (7) to a reaction plate, and at least one second hole (9) serving for mounting a stud for centring the flange (7) relative to said reaction plate, the base (17) of the support (16) being fixed to the flange (7) in a zone situated circumferentially between the first and second holes (8, 9).

12. Mechanism (1) according to any of Claims 1 to 11, **characterized in that** the pawl (26) comprises a fixing portion (28) fixed to a part of the clutch mechanism (1) which is fixed relative to the reaction plate, for example fixed to the cover (3), and a connecting portion (32) comprising two lateral arms (33) connecting said fixing portion (28) and control portion (31) of the pawl (26) and delimiting between them an opening (34) allowing passage of an actuating lobe (27) of the diaphragm (10), the width or circumferential dimension of the connecting portion (32) of the pawl being less than the width or circumferential dimension of the fixing portion (28) of the pawl (26).

13. Mechanism (1) according to any of Claims 1 to 12, **characterized in that** the diaphragm (10) comprises a lobe (27) intended to come to rest on the control portion (31) of the pawl (26), the lobe (27) being equipped with support means of adjustable position, such as for example a screw (53) engaged in a thread of said lobe (27).

14. Clutch device comprising a clutch mechanism (1) according to any of Claims 1 to 13, **characterized in that** it comprises a reaction plate, a friction disc able to be clamped between the pressure plate (2) and the reaction plate in the engaged position, and released in the disengaged position, the cover (3) being fixed relative to the reaction plate.
